# EUROPEAN PATENT APPLICATION

(11) **EP 3 620 349 A1**
(43) Date of publication of application: **11.03.2020**
(21) Application number: 19194851.2
(22) Date of filing: 02.09.2019
(51) Int. Cl.: B62D 5/00, B62D 6/00, B62D 7/15

(54) **VEHICLE STEERING CONTROL SYSTEM, VEHICLE AND CONTROL METHOD**

(30) Priority: 05.09.2018 CN 201811031370
(71) Applicant: Citic Dicastal Co., Ltd., 066011 Quinhuangdao, Heibei (CN)
(72) Inventor: Du, Dexi, Qinhuangdao, Heibei 066011 (CN); Wang, Dadong, Qinhuangdao, Heibei 066011 (CN); Liu, Weidong, Qinhuangdao, Heibei 066011 (CN); Wang, Shaoqian, Qinhuangdao, Heibei 066011 (CN); Xu, Shiwen, Qinhuangdao, Heibei 066011 (CN); Zhu, Zhihua, Qinhuangdao, Heibei 066011 (CN)
(74) Representative: Gong, Jinping

(57) **Abstract**

The invention discloses a vehicle steering control system, a vehicle and a control method. The vehicle steering control system comprise a steering wheel, a steering control component, a first rotation detecting component for detecting the rotation data of the steering wheel, and at least two wheel steering mechanisms; each wheel steering mechanism comprises a wheel axle, a steering knuckle and at least one steering driving component; the wheel axle is fixedly connected with the steering knuckle, and the wheel axle rotates horizontally with the horizontal rotation of the steering knuckle; the steering knuckle is connected with the steering driving component, and the steering knuckle rotates horizontally under the drive of the steering driving component.

## Description

### TECHNICAL FIELD

The invention relates to a steering system technology of a vehicle, and in particular to a vehicle steering control system, a vehicle and a control method.

### BACKGROUND

With the advancement of technology and the upgrading of users' consumption, the intellectualization of automobiles has become an unstoppable trend. The intellectualization of automobile puts forward new requirements to the steering system of automobile. The steering system of the automobile is used to change the traveling direction of the automobile during the running of the automobile.

In the prior art, the types of the vehicle steering system generally include: a mechanical steering system, a Hydraulic Power Steering system (HPS), an Electronic Hydrostatic Power Steering system (EHPS), and an Electric Power Steering system (EPS), etc. Among them, HPS, EHPS and EPS have increased the assist power, but the essence is mechanical steering system, wherein there is a direct mechanical connections between the steering wheel and each vehicle turning wheel, and it is also connected with a power assist system, thus there are many transfer links of steering force applied on the steering wheel, so that the steering execution process is longer, therefore, the vehicle cannot be quickly and flexibly turned; and the steering system has the disadvantages of occupying a large space and causing relatively large damage to the driver when the vehicle collides.

### SUMMARY

In view of this, the present invention is intended to provide a vehicle steering control system, a vehicle, and a control method, in which the rapid and flexible steering of the vehicle is able to realized, and the steering system occupies a small space.

In order to achieve the above object, the technical solution of the present invention is achieved as follows:
A vehicle steering control system, comprises a steering wheel, a steering control component, a first rotation detecting component for detecting the rotation data of the steering wheel, and at least two wheel steering mechanisms; each wheel steering mechanism comprises a wheel axle, a steering knuckle and at least one steering driving component; the wheel axle is fixedly connected with the steering knuckle, and the wheel axle rotates horizontally with the horizontal rotation of the steering knuckle; the steering knuckle is connected with the steering driving component, and the steering knuckle rotates horizontally under the drive of the steering driving component;
the steering control component is connected with the first rotation detecting component and the steering driving component, and the steering control component controls the rotation of the steering knuckle driven by the steering driving component according to the rotation data of the steering wheel obtained by the first rotation detecting component;
the system further comprises a second rotation detecting component for detecting the rotation data of the steering knuckle, wherein the second rotation detecting component is connected with the steering control component, and the steering control component controls the steering driving component to adjust the rotation of the steering knuckle according to the rotation data of the steering knuckle obtained by the second rotation detecting component.
the system further comprises a road sense simulator for applying a resistance torque to the rotation of the steering wheel according to the rotation data of the steering wheel, and a third rotation detecting component for detecting the rotation torque of the steering wheel, wherein both the road sense simulator and the third rotation detecting component are connected with the steering control component;
the steering control component controls the road sense simulator to apply the resistance torque to the rotation of the steering wheel according to the rotation data of the steering wheel obtained by the first rotation detecting component; and the steering control component controls the road sense simulator to adjust the resistance torque applied to the steering wheel according to the rotation torque of the steering wheel obtained by the third rotation detecting component.
the system further comprises a vehicle speed detecting component for detecting the driving speed of the vehicle, wherein the steering control component controls the rotation of the steering knuckle driven by the steering driving component according to the detection data of the first rotation detecting component and the vehicle speed detecting component.
the steering driving component comprises a first motor, wherein the housing of the first motor is fixed to the vehicle body of the vehicle, and the output shaft of the first motor is connected to the steering knuckle.
the road sense simulator comprises a second motor, wherein the lower end of the steering wheel is connected to the output shaft of the second motor, and the steering wheel and the output shaft of the second motor rotate coaxially; the housing of the second motor is fixed to the vehicle body of the vehicle, and the output torque of the second motor is the resistance torque applied by the road sense simulator.
the first rotation detecting component is a photoelectric encoder; and the second rotation detecting component is an angular displacement sensor.

A vehicle, comprises a vehicle body, a turning wheels, and the vehicle steering control system, the steering wheel is rotatably mounted to the vehicle body, the steering control component is disposed on the vehicle body, and the wheel steering mechanisms are disposed on the turning wheels; and the steering control component is an electronic control unit.

A vehicle steering control method, comprises controlling a rotation of a steering knuckle driven by a steering driving component according to rotation data of a steering wheel obtained by a first rotation detecting component; and
controlling the steering driving component to adjust the rotation of the steering knuckle according to the rotation data of the steering knuckle obtained by a second rotation detecting component.

The vehicle steering control method, further comprises:
controlling a road sense simulator to apply a resistance torque to the rotation of the steering wheel according to the rotation data of the steering wheel obtained by the first rotation detecting component; and
controlling the road sense simulator to adjust the resistance torque applied to the steering wheel according to the rotation torque of the steering wheel obtained by a third rotation detecting component.

The vehicle steering control method, the step of controlling the rotation of the steering knuckle driven by the steering driving component according to the rotation data of the steering wheel obtained by the first rotation detecting component comprises:
controlling the first rotation detecting component to obtain the rotation data of the steering wheel when the steering wheel rotates;
determining a target steering angle of the steering knuckle according to the rotation data of the steering wheel; and
controlling the rotation of the steering knuckle driven by the steering driving component according to the target steering angle of the steering knuckle.

The vehicle steering control method, the step of controlling the steering driving component to adjust the rotation of the steering knuckle according to the rotation data of the steering knuckle obtained by the second rotation detecting component comprises:
controlling the second rotation detecting component to obtain an actual steering angle of the steering knuckle when the steering knuckle rotates; and
controlling the steering driving component to adjust the rotation of the steering knuckle according to the difference between the target steering angle of the steering knuckle and the actual steering angle of the steering knuckle.

The vehicle steering control method, the step of controlling the road sense simulator to apply the resistance torque to the rotation of the steering wheel according to the rotation data of the steering wheel obtained by the first rotation detecting component comprises:
controlling the first rotation detecting component to obtain the rotation data of the steering wheel when the steering wheel rotates;
determining a target resistance torque applied to the rotation of the steering wheel by the road sense simulator according to the rotation data of the steering wheel; and
controlling the output torque of the road sense simulator according to the target resistance torque applied to the rotation of the steering wheel by the road sense simulator;
the step of controlling the road sense simulator to adjust the resistance torque applied to the steering wheel according to the rotation torque of the steering wheel obtained by the third rotation detecting component comprises:
   controlling the third rotation detecting component to obtain an actual rotational torque of the steering wheel when the steering wheel rotates; and
   controlling the road sense simulator to adjust the resistance torque applied to the steering wheel according to the difference between the target resistance torque applied to the rotation of the steering wheel by the road sense simulator and the actual rotation torque of the steering wheel.

The vehicle steering control system, the vehicle and the control method of the present invention comprise a steering wheel, a steering control component, a first rotation detecting component for detecting the rotation data of the steering wheel, and at least two wheel steering mechanisms; each wheel steering mechanism comprises a wheel axle, a steering knuckle and at least one steering driving component; the wheel axle is fixedly connected with the steering knuckle, and the wheel axle rotates horizontally with the horizontal rotation of the steering knuckle; the steering knuckle is connected with the steering driving component, and the steering knuckle rotates horizontally under the drive of the steering driving component; it can be seen that, for the steering control system, the vehicle and the control method of the present invention, the steering control component is electrically connected to the steering detecting component and the steering driving component, and the steering control component controls the steering driving component to drive the turning wheels to turn according to the rotation data of the steering wheel obtained by the steering detecting component, so that no mechanical connection is needed, therefore, a rapid and flexible steering of the vehicle is realized, and the steering system occupies a small space.

Other advantageous effects of the present invention will be further illustrated in the detailed description in conjunction with the specific technical solutions.

### BRIEF DESCRIPTION OF THE DRAWINGS

FIG. 1 is a schematic diagram of a vehicle steering control system according to Embodiment 1 of the present invention;
FIG. 2 is a schematic diagram of a vehicle steering control system according to Embodiment 2 of the present invention;
FIG. 3 is a schematic diagram of a working process of the turning wheels restoring in the vehicle steering control system according to Embodiment 2 of the present invention;
FIG. 4 is a schematic diagram of a road sense simulation subsystem in the vehicle steering control system according to Embodiment 2 of the present invention;
FIG. 5 is a schematic flow chart of a vehicle steering control method according to Embodiment 4 of the present invention.

### DETAILED DESCRIPTION OF THE INVENTION

It should be noted that, in the description of the embodiments of the present invention, unless otherwise specified and defined, the term "connected" shall be understood in a board sense. For example, it may be an electrical connection, or may be an internal connection between two components, and it may be directly connected, or may also be indirectly connected through an intermediate medium. For those skilled in the art, the specific meaning of the above terms can be understood in accordance with specific circumstances.

It should be noted that the terms "first\second\third" involved in the embodiments of the present invention, for example, are only used to distinguish similar objects and do not represent a specific ordering. It is understandable that "first\second\third" may be interchanged in a specific order or sequence if allowed. It should be understood that the objects distinguished by "first\second\third" may be interchanged in appropriate circumstances, so that the embodiments of the invention described herein can be carried out in a sequence other than those illustrated or described herein.

The embodiment of the present invention provides a vehicle steering control system, which comprises a steering wheel, a steering control component, a first rotation detecting component for detecting the rotation data of the steering wheel, and at least two wheel steering mechanisms; each wheel steering mechanism comprises a wheel axle, a steering knuckle and at least one steering driving component; the wheel axle is fixedly connected with the steering knuckle, and the wheel axle rotates horizontally with the horizontal rotation of the steering knuckle; the steering knuckle is connected with the steering driving component, and the steering knuckle rotates horizontally under the drive of the steering driving component; the steering control component is connected with the first rotation detecting component and the steering driving component, and the steering control component controls the rotation of the steering knuckle driven by the steering driving component according to the rotation data of the steering wheel obtained by the first rotation detecting component; the system further comprises a second rotation detecting component for detecting the rotation data of the steering knuckle, wherein the second rotation detecting component is connected with the steering control component, and the steering control component controls the steering driving component to adjust the rotation of the steering knuckle according to the rotation data of the steering wheel obtained by the second rotation detecting component.

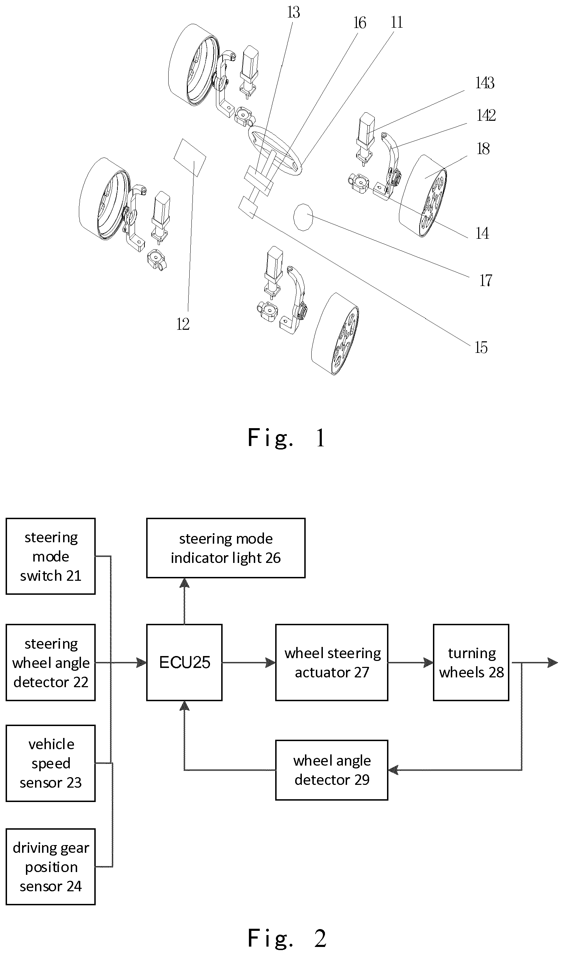

Here, for the sake of clarity, the various components of the steering control system of the vehicle in Fig. 1 are arranged at the position mounted on the vehicle, but the vehicle body of the vehicle is not shown, which is somewhat similar to the explosion diagram in the design rendering, wherein there are mechanical connections and electrical connections between the various components, as described in the text of the manual.

The rotation data of the steering wheel may include: the rotation direction, the steering angle, and the rotation speed of the rotation of the steering wheel. The rotation data of the steering knuckle may include: the rotation direction and the steering angle of the steering knuckle.

The second rotation detecting component is used to detect an actual steering angle of the steering knuckle and feed back to the steering control component, so that the steering control component corrects the actual steering angle error, therefore the steering is more accurate.

The embodiment of the present invention is mainly applicable to a vehicle provided with four wheels, such as a car, and a general vehicle uses the two front wheels as turning wheels. Therefore, there are at least two-wheel steering mechanisms, and if it is desired to achieve 360-degree steering, lateral linear movement, and the like, four-wheel steering mechanisms are required. If other types of cars are available, more wheel steering mechanisms may be required.

In the embodiment of the invention, the connection between the steering control component and the first rotation detecting component, the second rotation detecting component, the steering driving component, and the like is an electrical connection, more specifically a weak electrical connection. In addition, the steering driving component also is needed to be electrically connected to the power source of the vehicle, which is a strong electrical connection. These will be understood by those skilled in the art and will not be described in detail.

The principle of the embodiment of the present invention: the steering control component is electrically connected to the steering detecting component and the steering driving component, and the steering control component controls the steering driving component to drive the turning wheels to turn according to the rotation data of the steering wheel obtained by the steering detecting component, so that no mechanical connection is needed, therefore, a rapid and flexible steering of the vehicle is realized, and the steering system occupies a small space.

In one embodiment, the system further comprises a road sense simulator for applying a resistance torque to the rotation of the steering wheel according to the rotation data of the steering wheel, and a third rotation detecting component for detecting the rotation torque of the steering wheel, wherein both the road sense simulator and the third rotation detecting component are connected with the steering control component;
the steering control component controls the road sense simulator to apply the resistance torque to the rotation of the steering wheel according to the rotation data of the steering wheel obtained by the first rotation detecting component; and the steering control component controls the road sense simulator to adjust the resistance torque applied to the steering wheel according to the rotation torque of the steering wheel obtained by the third rotation detecting component. In this way, the steering wheel also has steering resistance close to real road conditions without mechanical connection to the turning wheels. It can be understood that the road sense simulator only provides the steering resistance to the user, so that the user has a better driving experience, but the absence of the road sense simulator does not affect the normal operation of the vehicle steering control system in the embodiment of the present invention. The third rotation detecting component is used to detect the actual rotational torque of the steering wheel, so as to control the road sense simulator to adjust the resistance torque applied to the steering wheel, so that the steering torque of the steering wheel is closer to a design preset. Specifically, the third rotation detecting component may be an electronic torque meter.

In one embodiment, the system further comprises a vehicle speed detecting component for detecting the driving speed of the vehicle, wherein the steering control component controls the rotation of the steering knuckle driven by the steering driving component according to the detection data of the first rotation detecting component and the vehicle speed detecting component. That is, the rotation of the steering knuckle is adjusted according to the vehicle speed, because the steering angle is generally large when the vehicle speed is slow, otherwise, the steering resistance is small, which is more consistent with the user's previous driving experience. In addition, since the situation of too large steering angle when the vehicle speed is high is an unsafe driving behavior, it can be corrected according to the situation. For example, when the vehicle speed is high, if the steering angles of the turning wheels are too large, for example, beyond 10 degrees, the control component can reduce the steering angles to a safe range, such as 10 degrees. It can be understood that there are many factors influencing the rotation of the steering knuckle, such as steering acceleration, road friction, etc. More information of the vehicle is collected, the adjust of the rotation of the steering knuckle is more accurate. However, it is also possible that only the rotation data of the steering wheel is collected.

Further, in order to be safer, when the vehicle speed is high, the steering control component can also greatly increase the resistance torque applied to the steering wheel by the road sense simulator, thereby preventing the user from erroneous operation.

In one embodiment, the steering driving component comprises a first motor, wherein the housing of the first motor is fixed to the vehicle body of the vehicle, and the output shaft of the first motor is connected to the steering knuckle. Through the drive of the motor, the structure is simple and the control is convenient. It can be understood that the steering driving component can also be constituted by other devices, for example, a hydraulic motor can be included.

In one embodiment, the road sense simulator comprises a second motor, wherein the lower end of the steering wheel is connected to the output shaft of the second motor, and the steering wheel and the output shaft of the second motor rotate coaxially; the housing of the second motor is fixed to the vehicle body of the vehicle, and the output torque of the second motor is the resistance torque applied by the road sense simulator. Through the resistance torque output by the motor, the structure is simple, and the control is convenient. It can be understood that the road sense simulator can also be constituted by other devices, for example, a hydraulic rotary damper can be included.

In one embodiment, the first rotation detecting component is a photoelectric encoder; and the second rotation detecting component is an angular displacement sensor. The photoelectric encoder is a common detecting component for measuring the rotation angle and the rotational speed, and has the advantages of high detection precision, simple implementation, etc. It can be understood that the first rotation detecting component may also be other detecting components, such as a rotary potentiometer or the like. The photoelectric encoder generally comprises a fixing portion and a measuring portion, wherein the fixing portion is mounted on the vehicle body, and the measuring portion is mounted on the steering wheel or the steering column below the steering wheel. The angular displacement sensor is a common detecting component for measuring an angular displacement, and has the advantages of high detection precision, non-contact, good long-term stability, etc. It can be understood that the second rotation detecting component can also be other detecting components, such as a rotary potentiometer, an encoder, or the like.

In one embodiment, the wheel axle is provided with a wheel hub, which is fixed to the wheel axle and rotates with the rotation of the wheel axle.

Further, an in-wheel motor may be mounted on the wheel hub, and the hub motor may directly drive the wheel axle to rotate according to the instruction of the user. Compared with the structure of driving two front wheels or driving four wheels by one engine in a conventional vehicle, the structure of the technical solution using the hub motor is simpler, and does not hinder and interfere with the structure of the vehicle steering control system of the embodiment of the present invention, so that the role of the car steering control system is better played. It can be understood that the wheel axle is not provided with the hub motor, but it is also possible to drive the wheel forward in a conventional manner.

An embodiment of the present invention further provides a vehicle, which comprises a vehicle body, turning wheels, and any one of the above described vehicle steering control system; wherein the steering wheel is rotatably mounted to the vehicle body, the steering control component is disposed on the vehicle body, and the wheel steering mechanisms are disposed on the turning wheels; and the steering control component is an ECU. ECU is also called "driving computer", "on-board computer", etc., which is a vehicle-specific microcomputer controller for use. Like ordinary computers, the ECU is composed of a microprocessor (CPU), memory (ROM and RAM), input/output interface (I/O), analog-to-digital converter (A/D), and large-scale integrated circuit such as wave-shaping, driver, etc. In this way, it is not necessary to separately provide control components on the vehicle steering control system, so that the structure is simplified and the cost is saved. It can be understood that the steering control component can also be an independent control component separately provided on the vehicle steering control system, rather than an ECU.

The embodiment of the invention further provides a vehicle steering control method, which comprises:
controlling a rotation of a steering knuckle driven by a steering driving component according to rotation data of a steering wheel obtained by a first rotation detecting component; and
controlling the steering driving component to adjust the rotation of the steering knuckle according to the rotation data of the steering knuckle obtained by a second rotation detecting component.

The method is that the steering control component controls the steering driving component to drive the turning wheels to turn according to the rotation data of the steering wheel obtained by the steering detecting component, and, so that the steering wheel and the steering wheel is not needed to be mechanically connected, therefore, a rapid and flexible steering of the vehicle is realized, and the steering system occupies a small space.

In one embodiment, the method further comprises:
controlling a road sense simulator to apply a resistance torque to the rotation of the steering wheel according to the rotation data of the steering wheel obtained by the first rotation detecting component; and
controlling the road sense simulator to adjust the resistance torque applied to the steering wheel according to the rotation torque of the steering wheel obtained by a third rotation detecting component.

Thus, the steering wheel also has steering resistance close to real road conditions without mechanical connection to the turning wheels.

In one embodiment, the step of controlling the steering driving component to drive the rotation of a steering knuckle according to the rotation data of the steering wheel obtained by the first rotation detecting component comprises:
the steering control component controls the first rotation detecting component to obtain the rotation data of the steering wheel when the steering wheel rotates;
the steering control component determines a target steering angle of the steering knuckle according to the rotation data of the steering wheel; and
the steering control component controls the rotation of the steering knuckle driven by the steering driving component according to the target steering angle of the steering knuckle.

The step of controlling the steering driving component to adjust the rotation of the steering knuckle according to the rotation data of the steering knuckle obtained by the second rotation detecting component comprises:
the steering control component controls the second rotation detecting component to obtain an actual steering angle of the steering knuckle when the steering knuckle rotates; and
the steering control component controls the steering driving component to adjust the rotation of the steering knuckle according to the difference between the target steering angle of the steering knuckle and the actual steering angle of the steering knuckle.

The steering control component corrects the actual steering angle error according to the difference between the target steering angle of the steering knuckle and the actual steering angle of the steering knuckle, so that the steering is more accurate.

In one embodiment, the step of controlling the road sense simulator to apply the resistance torque to the rotation of the steering wheel according to the rotation data of the steering wheel obtained by the first rotation detecting component comprises:
the steering control component controls the first rotation detecting component to obtain the rotation data of the steering wheel when the steering wheel rotates;
the steering control component determines a target resistance torque applied to the rotation of the steering wheel by the road sense simulator according to the rotation data of the steering wheel; and
the steering control component controls the output torque of the road sense simulator according to the target resistance torque applied to the rotation of the steering wheel by the road sense simulator;
the step of controlling the road sense simulator to adjust the resistance torque applied to the steering wheel according to the rotation torque of the steering wheel obtained by the third rotation detecting component comprises:
   the steering control component controls the third rotation detecting component to obtain an actual rotational torque of the steering wheel when the steering wheel rotates; and
   the steering control component controls the road sense simulator to adjust the resistance torque applied to the steering wheel according to the difference between the target resistance torque applied to the rotation of the steering wheel by the road sense simulator and the actual rotation torque of the steering wheel.

The steering control component corrects the resistance torque error outputted by the road sense simulator according to the difference between the target resistance torque applied to the rotation of the steering wheel by the road sense simulator and the actual rotation torque of the steering wheel, so that the rotation torque of the steering wheel is closer to the design preset.

The present invention will be further described in detail below in conjunction with the drawings and specific embodiments. It is understood that the specific embodiments described herein are merely illustrative of the invention and are not intended to limit the invention.

### Embodiment 1

Fig. 1 is a schematic diagram of a vehicle steering control system according to Embodiment 1 of the present invention. As shown in FIG. 1, the vehicle steering control system comprises a steering wheel 11, a steering control component 12, a first rotation detecting component 13, and four wheel steering mechanisms; each wheel steering mechanism comprises a wheel axle (not shown), a steering knuckle 142 and a steering driving component 143; the wheel axle is fixedly connected with the steering knuckle 142, and the wheel axle rotates horizontally with the horizontal rotation of the steering knuckle 142; the steering knuckle 142 is connected with the steering driving component 143, and the steering knuckle 142 rotates horizontally under the drive of the steering driving component 143; the steering control component 12 is connected with the first rotation detecting component 13 and the steering driving component 143, and the steering control component 12 controls the rotation of the steering knuckle driven by according to the rotation data of the steering wheel obtained by the first rotation detecting component; the system further comprises a second rotation detecting component 14 for detecting the rotation data of the steering knuckle, wherein the second rotation detecting component 14 is connected with the steering control component 12, and the steering control component 12 controls the steering driving component 143 to adjust the rotation of the steering knuckle according to the rotation data of the steering wheel obtained by the second rotation detecting component 14.

The rotation data of the steering wheel may comprise: the rotation direction, the steering angle, and the rotation speed of the rotation of the steering wheel 11. The knuckle rotation data may comprise: the rotation direction and the steering angle of the knuckle.

The second rotation detecting component 14 is used to detect an actual steering angle of the steering knuckle 142 and feed back to the steering control component 12, so that the steering control component 12 corrects the actual steering angle error, therefore the steering is more accurate.

In the present embodiment, the system further comprises a road sense simulator 15 for applying a resistance torque to the rotation of the steering wheel 11 according to the rotation data of the steering wheel 11, and a third rotation detecting component 16 for detecting the rotation torque of the steering wheel, wherein both the road sense simulator 15 and the third rotation detecting component 16 are connected with the steering control component 12; the steering control component 12 controls the road sense simulator 15 to apply the resistance torque to the rotation of the steering wheel according to the rotation data of the steering wheel obtained by the first rotation detecting component 13; and the steering control component 12 controls the road sense simulator 15 to adjust the resistance torque applied to the steering wheel 11 according to the rotation torque of the steering wheel obtained by the third rotation detecting component 16. In this way, the steering wheel 11 also has steering resistance close to real road conditions without mechanical connection to the turning wheels. The third rotation detecting component is used to detect the actual rotational torque of the steering wheel 11, so as to control the road sense simulator 15 to adjust the resistance torque applied to the steering wheel 11, so that the steering torque of the steering wheel 11 is closer to a design preset. Specifically, the third rotation detecting component may be an electronic torque meter.

In the present embodiment, the system further comprises a vehicle speed detecting component 17 for detecting the driving speed of the vehicle, wherein the steering control component 12 controls the rotation of the steering knuckle 142 driven by the steering driving component 143 according to the detection data of the first rotation detecting component 13 and the vehicle speed detecting component 17. That is, the rotation of the steering knuckle 142 is adjusted according to the vehicle speed, because the steering angle is generally large when the vehicle speed is slow, otherwise, the steering resistance is small, which is more consistent with the user's previous driving experience. In addition, since the situation of too large steering angle when the vehicle speed is high is an unsafe driving behavior, it can be corrected according to the situation. For example, when the vehicle speed is high, if the steering angles of the turning wheels are too large, for example, beyond 10 degrees, the control component can reduce the steering angle to a safe range, such as 10 degrees. It can be understood that there are many factors influencing the rotation of the steering knuckle 142, such as steering acceleration, road friction, etc. More information of the vehicle is collected, the adjust of the rotation of the steering knuckle is more accurate. However, it is also possible that only the rotation data of the steering wheel 11 is collected.

Further, in order to be safer, when the vehicle speed is high, the steering control component 12 can also greatly increase the resistance torque applied to the steering wheel by the road sense simulator, thereby preventing the user from erroneous operation.

Further, in addition to the linear vehicle speed, the vehicle speed detecting member 17 of the present embodiment can measure the swing angular velocity, that is, the speed of the turning. In this way, the steering angle of the steering wheel can be better controlled, so that it is safer.

In the present embodiment, the steering driving component 143 comprises a first motor, wherein the housing of the first motor is fixed to the vehicle body of the vehicle, and the output shaft of the first motor is connected to the steering knuckle. Through the drive of the motor, the structure is simple and the control is convenient. Specifically, the first motor can be a DC brushless motor which cooperates with a planetary gear reduction box and a servo motor driver. The brushless DC motor has the advantages of low speed and high-power operation, soft start and soft stop, good braking characteristics, omitting brake device and anti-bump and anti-vibration, etc.

In addition, in order to prevent the output shaft of the first motor from freely rotating, the free rotation of the output shaft may be restricted by the holding torque of the motor by keeping the first motor energized, or the free rotation of the output shaft may be restricted by adding a locking device inside the first motor, but the invention is not limited to this.

In the present embodiment, the road sense simulator 15 comprises a second motor, wherein the lower end of the steering wheel 11 is connected to the output shaft of the second motor, and the steering wheel 11 and the output shaft of the second motor rotate coaxially; the housing of the second motor is fixed to the vehicle body of the vehicle, and the output torque of the second motor is the resistance torque applied by the road sense simulator 15. Through the resistance torque output by the motor, the structure is simple, and the control is convenient. It can be understood that the road sense simulator can also be constituted by other devices, for example, a hydraulic rotary damper can be included. Specifically, the second motor may be an AC asynchronous motor equipped with an inverter, and the AC asynchronous motor has the advantages of simple structure, reliable operation, low price, strong overload capability, convenient use, installation and maintenance, etc. The second motor may also be other motors such as a DC motor.

In the present embodiment, the first rotation detecting component 13 is a photoelectric encoder; and the second rotation detecting component 14 is an angular displacement sensor. The photoelectric encoder is a common detecting component for measuring the rotation angle and the rotational speed, and has the advantages of high detection precision, simple implementation, etc. It can be understood that the first rotation detecting component 13 may also be other detecting components, such as a rotary potentiometer or the like. The photoelectric encoder generally comprises a fixing portion and a measuring portion, wherein the fixing portion is mounted on the vehicle body, and the measuring portion is mounted on the steering wheel or the steering column below the steering wheel. The angular displacement sensor is a common detecting component for measuring an angular displacement, and has the advantages of high detection precision, non-contact, good long-term stability, etc. It can be understood that the second rotation detecting component 14 can also be other detecting components, such as a rotary potentiometer, an encoder, or the like.

In the present embodiment, the wheel axle is provided with a wheel hub 18, which is fixed to the wheel axle and rotates with the rotation of the wheel axle.

Further, an in-wheel motor may be mounted on the wheel hub 18, and the hub motor may directly drive the wheel axle to rotate according to the instruction of the user. Compared with the structure of driving two front wheels or driving four wheels by one engine in a conventional vehicle, the structure of the technical solution using the hub motor is simpler, and does not hinder and interfere with the structure of the vehicle steering control system of the embodiment of the present invention, so that the role of the car steering control system is better played. I

### Embodiment 2

Fig. 2 is a schematic diagram of a vehicle steering control system according to Embodiment 2 of the present invention. As shown in FIG. 2, the vehicle steering control system includes a steering mode switch 21, a steering wheel angle detector 22, a vehicle speed sensor 23, a driving gear position sensor 24, an ECU 25, and a steering mode indicator light 26, a wheel steering actuator 27, turning wheels 28, and a wheel angle detector 29; wherein
the steering mode switch 21 is used to switch the steering mode, which may include a normal mode, an in-situ 360-degree steering mode, a lateral movement mode, and the like, and the control process of the ECU 25 may be different in different steering modes;
the steering wheel angle detector 22 is used to detect the steering angle of the steering wheel, and send the detection result to the ECU 25, and the ECU 25 controls the steering actuator to perform steering according to the detection result;
the vehicle speed sensor 23 is used to detect the traveling speed or the steering speed of the vehicle, and send the detection result to the ECU 25, and the ECU 25 controls the steering actuator to adjust the steering angle according to the detection result;
the driving gear position sensor 24 is used to sense the current driving gear position, for example, a forward gear or a reverse gear, because the steering control of the steering wheel may be different for the advance and the reverse, for example, the angle of the reverse is generally large, therefore, compared to the advance, the steering actuator will magnify the steering angle of the steering wheel when reversing;
the ECU 25 is used to control the execution of the wheel steering actuator 27 and control the display of the steering mode indicator light 26 according to the state or the detection result of the steering mode switch 21, the steering wheel angle detector 22, the vehicle speed sensor 23, and the driving gear position sensor 24;
the steering mode indicator light 26 is used to display the current steering mode;
the wheel steering actuator 27 is used to drive the turning wheels 28 to turn according to the instruction of the ECU 25;
the turning wheels 28 are used to be turned under the drive of the wheel steering actuator 27;
the wheel angle detector 29 is used to detect the steering angle of the steering wheel 28 and send the steering angle to the ECU 25, and the ECU 25 controls the wheel steering actuator 27 to adjust the steering angle of the steering wheel 28 according to the steering angle.

The steering wheel angle detector 22 corresponds to the first rotation detecting component 13 in Embodiment 1; the vehicle speed sensor 23 is equivalent to the vehicle speed detecting member 17 in Embodiment 1; the ECU 25 is equivalent to the steering control component 12 in Embodiment 1; the wheel steering actuator 27 is equivalent to the steering driving component 143 in Embodiment 1; the turning wheel 28 is equivalent to the wheel hub 18 in Embodiment 1; and the wheel angle detector 29 is equivalent to the second rotation detecting component 14 in Embodiment 1.

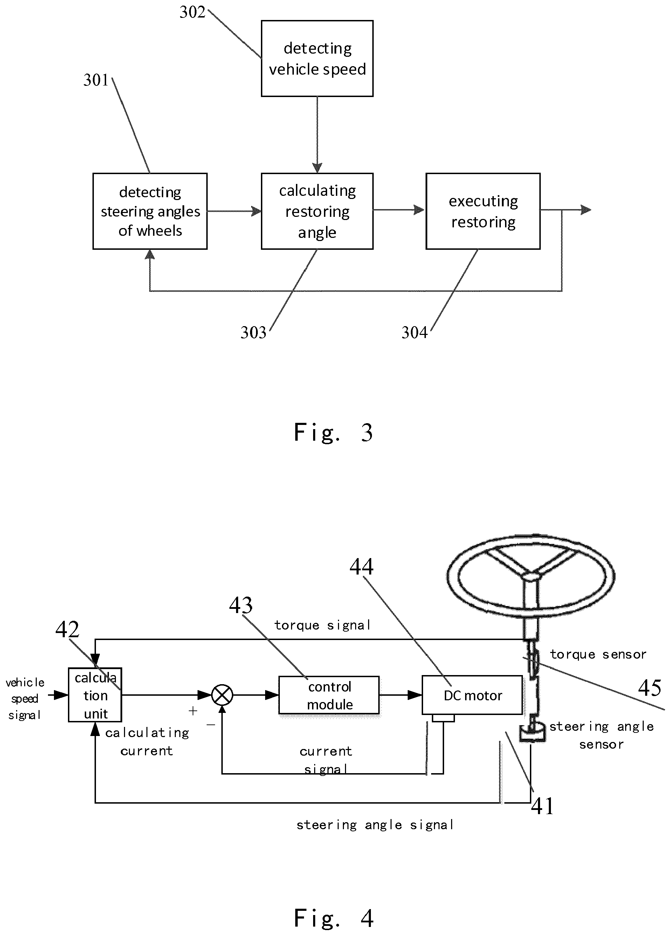

FIG. 3 is a schematic diagram of a working process of the turning wheels restoring in the vehicle steering control system according to Embodiment 2 of the present invention; as shown in FIG. 3, the working process of the turning wheels restoring comprises:
step 301: detecting the steering angles of the wheels. That is, the wheel angle detector 29 detects the current steering angles of the turning wheels of the vehicle so as to restore to the straight traveling state;
step 302: detecting the vehicle speed. That is, the vehicle speed sensor 23 detects the traveling speed of the vehicle;
step 303: calculating the restoring angle. That is, the ECU 25 calculates the restoring angle of the turning wheels 28 according to the wheel steering angle and the vehicle speed;
step 304: executing the restoring. That is, the wheel steering actuator 27 drives the turning wheels 28 to restore.

In a mechanical steering system, after the user releases the steering wheel, the steering wheel automatically restore; the vehicle steering system of the embodiment of the invention needs to implement this function, so when the ECU 25, via a corresponding detecting component, detects that the torque applied to the steering wheel is zero, the work process of restoring the steering wheel is started; the detecting component for detecting the torque applied to the steering wheel may be the third rotation detecting component 16 in Embodiment 1.

FIG. 4 is a schematic diagram of a road sense simulation subsystem in the vehicle steering control system according to Embodiment 2 of the present invention. As shown in FIG. 4, the road sense simulation subsystem includes: a rotation angle sensor 41, a calculation unit 42, a control module 43, a DC motor 44, and a torque sensor 45; wherein
the angle sensor 41 is used to detect the steering angle of the steering wheel, and send the steering angle to the calculation unit 42;
the calculation unit 42 is used to calculate a current according to the steering angle, and send the current to the control module 43, wherein the current is a control current, which is a weak current signal;
the control module 43 is used to control the operation of the DC motor 44, that is, control the output torque of the DC motor 44, according to the current calculated by the calculation unit 42;
the torque sensor is used to detect the rotation resistance torque of the steering wheel, and send the detected rotation resistance torque to the calculation unit 42 to adjust the output torque of the DC motor 44 through the control module 43.

The rotation angle sensor 41 is equivalent to the first rotation detecting component 13 in Embodiment 1; the calculation unit 42 and the control module 43 are both equivalent to the steering control component 12 in Embodiment 1, that is, the steering control component 12 may have the functions of the calculation unit 42 and the control module 43; the DC motor 44 corresponds to the second motor in Embodiment 1, and the torque sensor 45 corresponds to the third rotation detecting component 16 in Embodiment 1.

### Embodiment 3

An embodiment of the present invention further provides a vehicle which comprises a vehicle body, a steering wheel, and a vehicle steering control system according to Embodiment 1; the steering wheel 11 is rotatably mounted to the vehicle body, the steering control component 12 is disposed on the vehicle body, and the wheel steering mechanisms are disposed on the turning wheels; and the steering control component is an ECU. In this way, it is not necessary to separately provide control components on the vehicle steering control system, so that the structure is simplified and the cost is saved. It can be understood that the steering control component can also be an independent control component separately provided on the vehicle steering control system, rather than an ECU.

### Embodiment 4

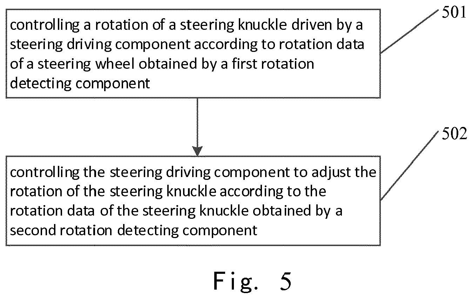

FIG. 5 is a schematic flow chart of a vehicle steering control method according to Embodiment 4 of the present invention. The method may be implemented by a steering control component, wherein the steering control component may be an ECU. As shown in FIG. 5, the vehicle steering control method includes:
step 501: controlling a rotation of a steering knuckle driven by a steering driving component according to rotation data of a steering wheel obtained by a first rotation detecting component;
   specifically, the step of controlling the rotation of the steering knuckle driven by the steering driving component according to the rotation data of the steering wheel obtained by the first rotation detecting component comprises:
   the steering control component controls the first rotation detecting component to obtain the rotation data of the steering wheel when the steering wheel rotates;
   the steering control component determines a target steering angle of the steering knuckle according to the rotation data of the steering wheel; and
   the steering control component controls the rotation of the steering knuckle driven by the steering driving component according to the target steering angle of the steering knuckle.
step 502: controlling the steering driving component to adjust the rotation of the steering knuckle according to the rotation data of the steering knuckle obtained by a second rotation detecting component.

The step of controlling the steering driving component to adjust the rotation of the steering knuckle according to the rotation data of the steering knuckle obtained by the second rotation detecting component comprises:
the steering control component controls the second rotation detecting component to obtain an actual steering angle of the steering knuckle when the steering knuckle rotates; and
the steering control component controls the steering driving component to adjust the rotation of the steering knuckle according to the difference between the target steering angle of the steering knuckle and the actual steering angle of the steering knuckle.

Further, the method further includes:
the steering control component controls a road sense simulator to apply a resistance torque to the rotation of the steering wheel according to the rotation data of the steering wheel obtained by the first rotation detecting component; and
the steering control component controls the road sense simulator to adjust the resistance torque applied to the steering wheel according to the rotation torque of the steering wheel obtained by a third rotation detecting component.

The step of the steering control component controls the road sense simulator to apply the resistance torque to the rotation of the steering wheel according to the rotation data of the steering wheel obtained by the first rotation detecting component comprises:
the steering control component controls the first rotation detecting component to obtain the rotation data of the steering wheel when the steering wheel rotates;
the steering control component determines a target resistance torque applied to the rotation of the steering wheel by the road sense simulator according to the rotation data of the steering wheel; and
the steering control component controls the output torque of the road sense simulator according to the target resistance torque applied to the rotation of the steering wheel by the road sense simulator;
the step that the steering control component controls the road sense simulator to adjust the resistance torque applied to the steering wheel according to the rotation torque of the steering wheel obtained by the third rotation detecting component comprises:
   the steering control component controls the third rotation detecting component to obtain an actual rotational torque of the steering wheel when the steering wheel rotates; and
   the steering control component controls the road sense simulator to adjust the resistance torque applied to the steering wheel according to the difference between the target resistance torque applied to the rotation of the steering wheel by the road sense simulator and the actual rotation torque of the steering wheel.

## Claims

1. A vehicle steering control system is **characterized in that** the system comprises a steering wheel, a steering control component, a first rotation detecting component for detecting the rotation data of the steering wheel, and at least two wheel steering mechanisms; each wheel steering mechanism comprises a wheel axle, a steering knuckle and at least one steering driving component; the wheel axle is fixedly connected with the steering knuckle, and the wheel axle rotates horizontally with the horizontal rotation of the steering knuckle; the steering knuckle is connected with the steering driving component, and the steering knuckle rotates horizontally under the drive of the steering driving component;
the steering control component is connected with the first rotation detecting component and the steering driving component, and the steering control component controls the rotation of the steering knuckle driven by the steering driving component according to the rotation data of the steering wheel obtained by the first rotation detecting component;
the system further comprises a second rotation detecting component for detecting the rotation data of the steering knuckle, wherein the second rotation detecting component is connected with the steering control component, and the steering control component controls the steering driving component to adjust the rotation of the steering knuckle according to the rotation data of the steering knuckle obtained by the second rotation detecting component.

2. The vehicle steering control system according to claim 1, wherein the system further comprises a road sense simulator for applying a resistance torque to the rotation of the steering wheel according to the rotation data of the steering wheel, and a third rotation detecting component for detecting the rotation torque of the steering wheel, wherein both the road sense simulator and the third rotation detecting component are connected with the steering control component;
the steering control component controls the road sense simulator to apply the resistance torque to the rotation of the steering wheel according to the rotation data of the steering wheel obtained by the first rotation detecting component; and the steering control component controls the road sense simulator to adjust the resistance torque applied to the steering wheel according to the rotation torque of the steering wheel obtained by the third rotation detecting component.

3. The vehicle steering control system according to claim 1, wherein the system further comprises a vehicle speed detecting component for detecting the driving speed of the vehicle, wherein the steering control component controls the rotation of the steering knuckle driven by the steering driving component according to the detection data of the first rotation detecting component and the vehicle speed detecting component.

4. The vehicle steering control system according to claim 1, wherein the steering driving component comprises a first motor, wherein the housing of the first motor is fixed to the vehicle body of the vehicle, and the output shaft of the first motor is connected to the steering knuckle.

5. The vehicle steering control system according to claim 2, wherein the road sense simulator comprises a second motor, wherein the lower end of the steering wheel is connected to the output shaft of the second motor, and the steering wheel and the output shaft of the second motor rotate coaxially; the housing of the second motor is fixed to the vehicle body of the vehicle, and the output torque of the second motor is the resistance torque applied by the road sense simulator.

6. The vehicle steering control system according to claim 1, wherein the first rotation detecting component is a photoelectric encoder; and the second rotation detecting component is an angular displacement sensor.

7. A vehicle is **characterized in that** the vehicle comprises a vehicle body, a turning wheels, and the vehicle steering control system according to claim 1; wherein the steering wheel is rotatably mounted to the vehicle body, the steering control component is disposed on the vehicle body, and the wheel steering mechanisms are disposed on the turning wheels; and the steering control component is an electronic control unit.

8. A vehicle steering control method is **characterized in that** the method comprises:
controlling a rotation of a steering knuckle driven by a steering driving component according to rotation data of a steering wheel obtained by a first rotation detecting component; and
controlling the steering driving component to adjust the rotation of the steering knuckle according to the rotation data of the steering knuckle obtained by a second rotation detecting component.

9. The vehicle steering control method according to claim 8, wherein the method further comprises:
controlling a road sense simulator to apply a resistance torque to the rotation of the steering wheel according to the rotation data of the steering wheel obtained by the first rotation detecting component; and
controlling the road sense simulator to adjust the resistance torque applied to the steering wheel according to the rotation torque of the steering wheel obtained by a third rotation detecting component.

10. The vehicle steering control method according to claim 9, wherein the step of controlling the rotation of the steering knuckle driven by the steering driving component according to the rotation data of the steering wheel obtained by the first rotation detecting component comprises:
controlling the first rotation detecting component to obtain the rotation data of the steering wheel when the steering wheel rotates;
determining a target steering angle of the steering knuckle according to the rotation data of the steering wheel; and
controlling the rotation of the steering knuckle driven by the steering driving component according to the target steering angle of the steering knuckle.

11. The vehicle steering control method according to claim 10, wherein the step of controlling the steering driving component to adjust the rotation of the steering knuckle according to the rotation data of the steering knuckle obtained by the second rotation detecting component comprises:
controlling the second rotation detecting component to obtain an actual steering angle of the steering knuckle when the steering knuckle rotates; and
controlling the steering driving component to adjust the rotation of the steering knuckle according to the difference between the target steering angle of the steering knuckle and the actual steering angle of the steering knuckle.

12. The vehicle steering control method according to claim 11, wherein the step of controlling the road sense simulator to apply the resistance torque to the rotation of the steering wheel according to the rotation data of the steering wheel obtained by the first rotation detecting component comprises:
controlling the first rotation detecting component to obtain the rotation data of the steering wheel when the steering wheel rotates;
determining a target resistance torque applied to the rotation of the steering wheel by the road sense simulator according to the rotation data of the steering wheel; and
controlling the output torque of the road sense simulator according to the target resistance torque applied to the rotation of the steering wheel by the road sense simulator;
the step of controlling the road sense simulator to adjust the resistance torque applied to the steering wheel according to the rotation torque of the steering wheel obtained by the third rotation detecting component comprises:
controlling the third rotation detecting component to obtain an actual rotational torque of the steering wheel when the steering wheel rotates; and
controlling the road sense simulator to adjust the resistance torque applied to the steering wheel according to the difference between the target resistance torque applied to the rotation of the steering wheel by the road sense simulator and the actual rotation torque of the steering wheel.
